# EUROPEAN PATENT APPLICATION

(11) **EP 4 280 651 A1**
(43) Date of publication of application: **22.11.2023**
(21) Application number: 21919316.6
(22) Date of filing: 13.01.2021
(51) Int. Cl.: H04W 16/28, H04W 56/00, H04W 48/20

(54) **TERMINAL AND COMMUNICATION METHOD**

(71) Applicant: NTT DOCOMO, INC., Tokyo 100-6150 (JP)
(72) Inventor: OHARA, Tomoya, Tokyo 100-6150 (JP); OKAMURA, Masaya, Tokyo 100-6150 (JP)
(74) Representative: Hoffmann Eitle
(86) International application number: PCT/JP2021/000934
(87) International publication number: WO 2022/153422

(57) **Abstract**

A terminal includes a receiving unit configured to receive, in an idle mode or an inactive mode, a reference signal transmitted to another terminal in a connected mode, in a serving cell or a neighboring cell, and a control unit configured to execute an operation to be performed using an SSB (SS/PBCH block) by using the reference signal.

## Description

### Technical Field

The present invention relates to a terminal and a communication method in a radio communication system.

### Background Art

In 3rd Generation Partnership Project (3GPP), a radio communication scheme called 5G or New Radio (NR) (hereinafter referred to as "NR") has been proposed in order to realize a further increase in system volume, further increase in data transmission rate, further reduction in delay in a radio section, and the like. In 5G, various radio technologies and network architectures are being discussed to meet the requirement of achieving a throughput of 10 Gbps or higher and a delay of 1 ms or less in the radio section (e.g., Non-Patent Document 1).

Further, in NR, in order to enhance low power consumption, it has been discussed that terminals in idle mode or inactive mode use signals used by terminals in connected mode, such as a Tracking Reference Signal (TRS) and a Channel State Information Reference Signal (CSI-RS).

### Prior Art Document

### Non-Patent Document

[Non-Patent Document 1] 3GPP TS 38.213 V16.3.0 (2020-09)
[Non-Patent Document 2] 3GPP TS 38.331 V16.2.0 (2020-09)

### Summary of the Invention

### Problems to be Solved by the Invention

When a terminal in an idle mode or an inactive mode uses a signal used by another terminal in a connected mode, it has not been specified how the terminal in idle mode or inactive mode should operate using such signals.

The present invention has been made in view of the above points, and an object of the present invention is to enable a terminal in an idle mode or an inactive mode to use a signal used by another terminal in a connected mode.

### Means for Solving the Problems

According to the disclosed technology, a terminal includes: a receiving unit configured to receive, in an idle mode or an inactive mode, a reference signal transmitted to another terminal in a connected mode in a serving cell or a neighboring cell; and a control unit configured to execute an operation to be performed using an SSB (SS/PBCH block) by using the reference signal.

### Effects of the Invention

According to the disclosed technology, there is provided a technology in which a terminal in an idle mode or an inactive mode uses a signal used by another terminal in a connected mode.

### Brief Description of Drawings

[FIG.1] FIG. 1 is a diagram illustrating a radio communication system according to an embodiment of the present invention; [FIG. 2] FIG. 2 is a diagram illustrating an example (1) of monitoring;
[FIG. 3] FIG. 3 is a diagram illustrating an example (2) of monitoring;
[FIG. 4] FIG. 4 is a diagram illustrating a communication state in the embodiment of the present invention;
[FIG. 5] FIG. 5 is a flowchart illustrating an operation in the embodiment of the present invention;
[FIG. 6] FIG. 6 is a sequence diagram illustrating an operation in the embodiment of the present invention;
[FIG. 7] FIG. 7 is a diagram illustrating an example of a functional configuration of a base station 10 according to an embodiment of the present invention;
[FIG. 8] FIG. 8 is a diagram illustrating an example of a functional configuration of a terminal 20 according to an embodiment of the present invention; and
[FIG. 9] FIG. 9 is a diagram illustrating an example of a hardware configuration of the base station 10 or the terminal 20 according to the embodiment of the present invention.

### Mode for Carrying Out of the Invention

Hereinafter, embodiments of the present invention will be described with reference to the drawings. It should be noted that the embodiments described below are merely examples, and embodiments to which the present invention is applied are not limited to the following embodiments.

In the operation of the radio communication system according to the embodiment of the present invention, an existing technique is appropriately used. However, the existing technology is, for example, the existing LTE, but is not limited to the existing LTE. In addition, the term "LTE" used in the present specification has a broad meaning including LTE-Advanced and schemes after LTE-Advanced (For example: NR) unless otherwise specified.

In addition, in the embodiments of the present invention described below, terms used in the existing LTE such as Synchronization signal (SS), Primary SS (PSS), Secondary SS (SSS), Physical broadcast channel (PBCH), Physical random access channel (PRACH), Physical Downlink Control Channel (PDCCH), Physical Downlink Shared Channel (PDSCH), Physical Uplink Control Channel (PUCCH), Physical Uplink Shared Channel (PUSCH), and the like are used. This is for convenience of description, and signals, functions, and the like similar to these may be referred to by other names. Also, the above terms in NR correspond to NR-SS, NR-PSS, NR-SSS, NR-PBCH, NR-PRACH, and the like. However, even a signal used for NR is not necessarily specified as "NR-".

Further, in the embodiments of the present invention, a duplex scheme may be a TDD (Time Division Duplex) scheme, an FDD (Frequency Division Duplex) scheme, or another scheme (for example, Flexible Duplex and the like).

In addition, in the embodiment of the present invention, when a radio parameter or the like is "configured", a predetermined value may be pre-configured or a radio parameter indicated by the base station 10 or the terminal 20 may be configured.

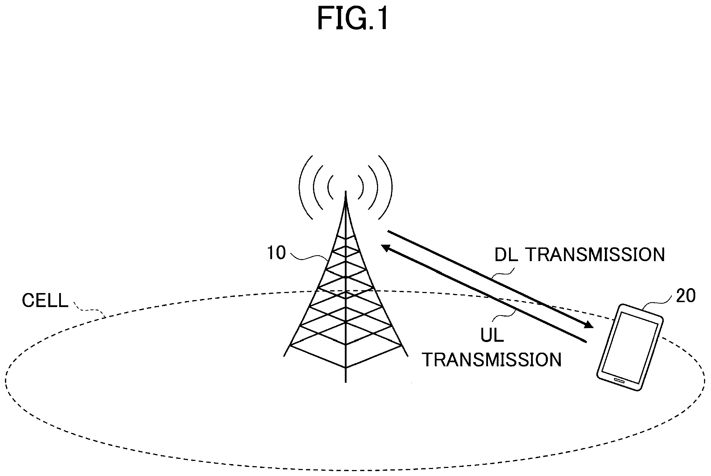

FIG. 1 is a diagram illustrating a configuration example of a radio communication system according to an embodiment of the present invention. As illustrated in FIG. 1, the radio communication system according to the embodiment of the present invention includes the base station 10 and the terminal 20. Although one base station 10 and one terminal 20 are illustrated in FIG. 1, this is merely an example, and a plurality of base stations 10 and a plurality of terminals 20 may be provided.

The base station 10 is a communication device that provides one or a plurality of cells and performs radio communication with the terminal 20. A physical resource of a radio signal is defined in a time domain and a frequency domain. The time domain may be defined by the number of symbols of Orthogonal Frequency Division Multiplexing (OFDM). The frequency domain may be defined by the number of subcarriers or the number of resource blocks. In addition, a Transmission Time Interval (TTI) in the time domain may be a slot or a sub-slot, or a TTI may be a subframe.

The base station 10 is capable of performing carrier aggregation in which a plurality of cells (a plurality of Component Carriers (CCs)) are aggregated to perform communication with the terminal 20. In carrier aggregation, one primary cell (PCell, Primary Cell) and one or more secondary cells (SCells, Secondary Cells) are used.

The base station 10 transmits a synchronization signal, system information, and the like to the terminal 20. The synchronization signal is, for example, an NR-PSS and an NR-SSS. The system information is transmitted by, for example, the NR-PBCH or the PDSCH, and is also referred to as broadcast information. As illustrated in FIG. 1, the base station 10 transmits a control signal or data to the terminal 20 in downlink (DL), and receives a control signal or data from the terminal 20 in uplink (UL). Here, what is transmitted on a control channel such as the PUCCH or the PDCCH is referred to as a control signal, and what is transmitted on a shared channel such as the PUSCH or the PDSCH is referred to as data. However, such a way of naming is merely an example.

The terminal 20 is a communication device having a radio communication function such as smartphones, mobile phones, tablets, wearable terminals, and Machine-to-Machine (M2M) communication modules. As illustrated in FIG. 1, the terminal 20 uses various communication services provided by the radio communication system by receiving a control signal or data from the base station 10 in DL and transmitting a control signal or data to the base station 10 in UL. Note that the terminal 20 may be referred to as UE and the base station 10 may be referred to as gNB.

The terminal 20 is capable of performing carrier aggregation for performing communication with the base station 10 by bundling a plurality of cells (a plurality of CCs). In carrier aggregation, one primary cell and a plurality of secondary cells are used. Also, a PUCCH-SCell with PUCCH may be used.

In addition, in NR, in order to enhance low power consumption, it has been considered that the terminal 20 in idle mode or inactive mode uses signals such as a Tracking Reference Signal (TRS) and a Channel State Information Reference Signal1 (CSI-RS) used by another terminal 20 in the connected mode. It should be noted that the base station 10 need not be required to always transmit the TRS or the CSI-RS.

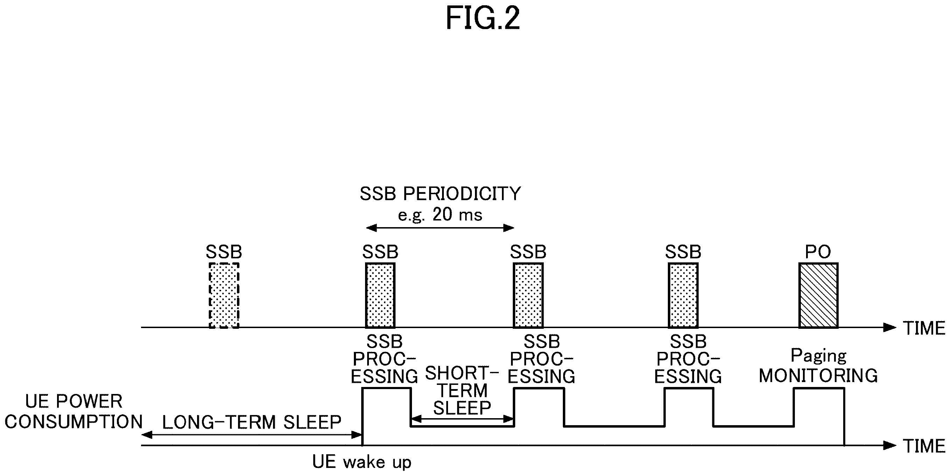

FIG. 2 is a diagram illustrating an example (1) of monitoring. As illustrated in FIG. 2, when the terminal 20 in idle mode or inactive mode in NR monitors paging in Paging Occasion (PO), the terminal 20 performs time/frequency tracking and Auto Gain Control (AGC) in advance. Therefore, the terminal 20 needs to perform an SSB (SS/PBCH Block) reception process.

However, for example, as compared with a Cell Reference Signal (CRS) in LTE, because the SSB is transmitted in a relatively long periodicity, as illustrated in FIG. 2, the terminal 20 needs to wake up from a long-term sleep, perform SSB processing, followed by entering a short-term sleep for SSB reception processing. Therefore, the terminal 20 cannot secure the long-term sleep, which leads to an increase in power consumption.

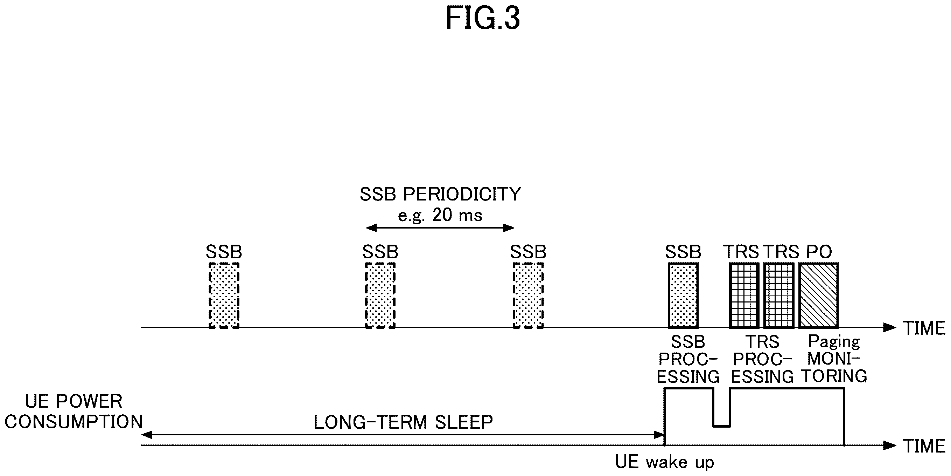

Therefore, in order to monitor paging, it has been discussed to use TRS and/or CSI-RS in addition to SSB. The TRS and the CSI-RS are reference signals used by the terminal 20 in the connected mode. FIG. 3 is a diagram illustrating an example (2) of monitoring. As illustrated in FIG. 3, for example, the terminal 20 in idle mode or inactive mode may use the TRS to perform the SSB processing and the TRS processing to monitor paging.

That is, as illustrated in FIG. 3, the terminal 20 can sleep for a long-term periodicity. Because the reference signal used by another terminal 20 in the connected mode is used by the terminal 20 in idle mode or inactive mode, no additional resource overhead occurs, and the power consumption of the terminal 20 in idle mode or inactive mode can be reduced. It should be noted that the TRS illustrated in FIG. 3 may be replaced with the CSI-RS.

However, when another terminal 20 in the connected mode does not exist in the target beam of the target cell, the available TRS and/or CSI-RS need not be transmitted from the base station 10. Therefore, the terminal 20 in idle mode or inactive mode cannot use the TRS and/or CSI-RS and cannot realize power consumption reduction.

In addition, because there is a possibility that the resource position of the TRS and/or the CSI-RS transmitted to another terminal 20 in the connected mode is not a resource position suitable for the terminal 20 in idle mode or inactive mode to use, there is a possibility that the terminal 20 in idle mode or inactive mode cannot use the TRS and/or the CSI-RS depending on the operation configuration or restriction on the base station 10 side.

On the other hand, for example, as illustrated in FIG. 3, if the TRS and/or the CSI-RS is transmitted at the resource position around the PO, it is possible to reduce the power consumption of the terminal 20 in idle mode or inactive mode.

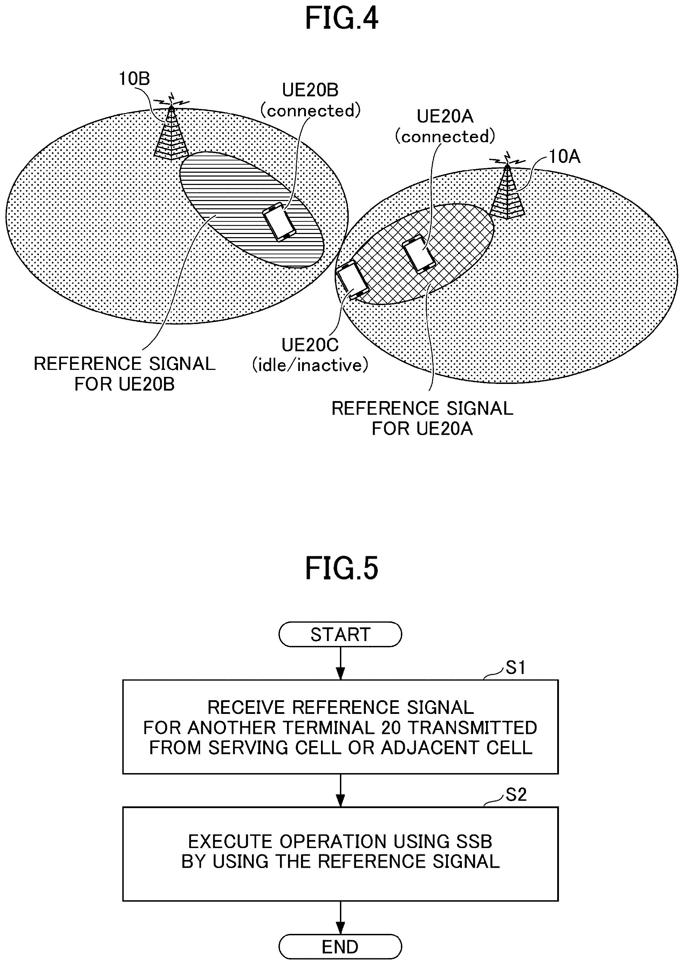

FIG. 4 is a diagram illustrating a communication state in the embodiment of the present invention. In the embodiment of the present invention, in a serving or adjacent cell, the terminal 20 in idle mode or inactive mode can execute an operation to be performed using an SSB by using any of the reference signals transmitted to other terminals 20, including another terminal 20 in connected mode.

For example, as illustrated in FIG. 4, the UE20C in idle mode or inactive mode may be able to execute an operation to be performed using the SSB by using the reference signal for the UE20A transmitted from the base station 10A constituting the serving cell and/or the reference signal for the UE20B transmitted from the base station 10B constituting the neighboring cell. Hereinafter, any reference signal transmitted to another terminal 20 including a terminal 20 in the connected mode is also referred to as a "reused reference signal (reused RS)".

FIG. 5 is a flowchart illustrating the operation in the embodiment of the present invention. It is assumed that the terminal 20 in FIG. 5 has already transitioned to idle mode or inactive mode and performs step S1. In step S1, the terminal 20 receives the reference signal for another terminal 20 transmitted in the serving cell or the neighboring cell. In subsequent step S2, the terminal 20 uses the received reference signal to execute an operation to be performed using the SSB.

In the above-described step S1, the reference signals transmitted to another terminal 20 including a terminal 20 in the connected mode in the serving cell or the adjacent cell may be any one of the following 1) to 5) or a combination of two or more thereof.

1) Demodulation Reference Signal (DMRS)
2) Tracking Reference Signal (TRS)
3) Channel State Information Reference Signal (CSI-RS)
4) Phase Tracking Reference Signal (PTRS)
5) Positioning Reference Signal (PRS)

In the above step S2, the operation performed by the terminal 20 in idle mode or inactive mode using the SSB may be any one of the following 1) to 5) or a combination of two or more thereof.

1) Time and/or frequency tracking
2) Auto Gain Control (AGC)
3) Measurement related to Radio Resource Management (RRM)
4) Beam selection and/or adjustment. A correspondence relationship between the reused reference signal and the SSB index (i.e., the SSB beam) may be defined or indicated. As an example of the correspondence relationship, a Transmission Configuration Indicator (TCI) state between the reused reference signal and the SSB index may be configured.
5) Random Access Channel (RACH) occasion and/or preamble selection. The correspondence relationship between the RACH occasion and the reused reference signal may be defined or indicated. The correspondence relationship between the reused reference signal and the SSB index may be defined or indicated so that the correspondence relationship between the RACH occasion and/or the preamble and the reused reference signal may be defined or indicated indirectly.

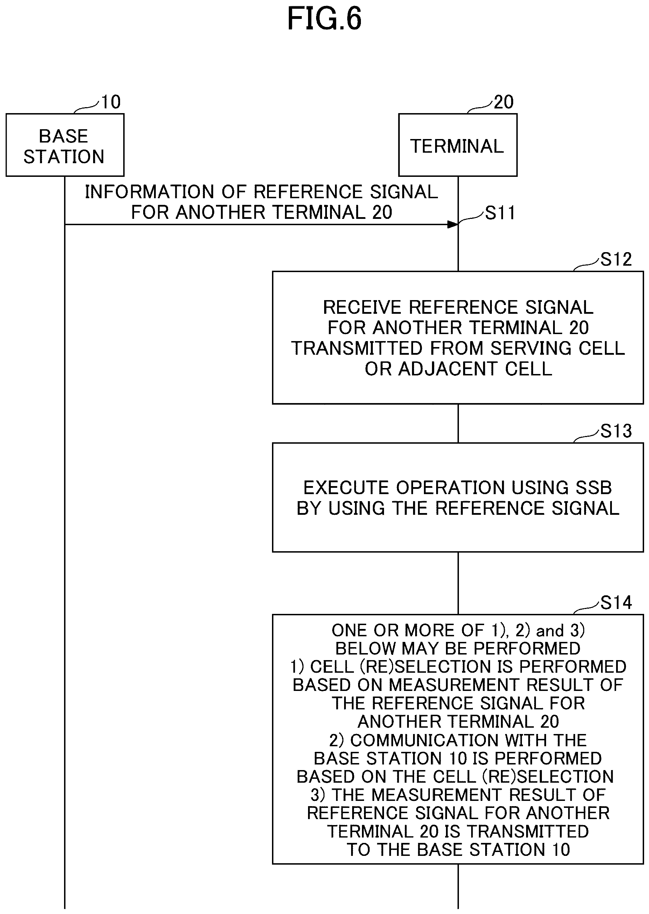

FIG. 6 is a sequence diagram illustrating the operation in the embodiment of the present invention. In step S11, the base station 10 may transmit information related to reference signals for another terminal 20, that is, reused reference signals, to the terminal 20 via the serving cell. In the following step S12, the terminal 20 receives a reference signal, that is, a reused reference signal, for another terminal 20 transmitted in the serving cell or the neighbor cell. In subsequent step S13, the terminal 20 uses the received reference signal to execute an operation to be performed using an SSB. In the subsequent step S14, the terminal 20 may perform an operation of the cell (re)selection based on the measurement result of the reference signal for another terminal 20, that is, the reused reference signal, may perform communication based on the cell (re)selection operation with the base station 10, or may transmit the measurement result of the reused reference signal to the base station 10.

Here, the terminal 20 may transition to idle mode or inactive mode before step S11. In addition, the terminal 20 may transition to the connected mode before step S11 and may transition to idle mode or inactive mode after step S11 and before step S12.

In the above-mentioned step S11, in order for the terminal 20 in idle mode or inactive mode to use the reference signals for another terminal 20 as the reused reference signals, the base station 10 may indicate, to the terminal 20, some of the existing configurations (for example, resource positions, sequence information, and the like) related to the reference signals by System Information Block (SIB), Radio Resource Control (RRC), Downlink Control Information (DCI), Media Access Control (MAC) signaling, and the like. For example, in the existing configuration related to the reused reference signal, some parameters may be defined by the specification, and the remaining parameters may be indicated by the SIB or the like.

Further, the terminal 20 may assume reception of different reused reference signals or SSBs in idle mode and inactive mode. For example, the reused reference signal assumed to be received in each mode may be indicated to the terminal 20 by SIB, RRC, MAC-CE (Control Element), DCI, or the like. The reused reference signal assumed to be received in each mode may be defined in advance by a specification for each mode of idle mode and inactive mode. In addition, the terminal 20 may assume the reused reference signal to be received based on the configured SSB periodicity.

Also, when the reused reference signal is used for RRM measurement, the measurement result of the SSB and the measurement result of the reused reference signal may be used in combination. When the SSB measurement result and the measurement result of the reused reference signal are used in combination, a method of combining the SSB measurement result and the measurement result of the reused reference signal (for example, weighting for each measurement result) may be defined by a specification or may be indicated by the base station 10 to the terminal 20.

In addition, when the terminal 20 in idle mode or inactive mode uses the reused reference signal transmitted from another cell, the reused reference signal may be used particularly for the RRM measurement. For example, a reused reference signal transmitted from another cell may be used for measurement necessary for cell reselection.

Further, when the terminal 20 in idle mode or inactive mode uses the PRS as the reused reference signal, a PRS muting pattern different from that in the active mode or the connected mode may be assumed. The PRS muting pattern is information indicating a slot, a symbol, or the like in which the PRS is not assumed to be transmitted, and the PRS muting pattern may be read as resource information (or a part of the resource information) of the PRS.

For example, the terminal 20 in idle mode or inactive mode may ignore the PRS muting pattern. That is, the terminal 20 in idle mode or inactive mode need not mute the PRS. In addition, for example, it may be assumed that different PRS muting patterns are configured between the terminal 20 in idle mode or inactive mode and another terminal 20 in the active mode or the connected mode.

In addition, a new reference signal having a function corresponding to one or a plurality of reference signals indicated in the following 1) to 5) and further having a function of supporting an operation performed by the terminal 20 in idle mode or inactive mode using the SSB may be defined.

1)DMRS
2)TRS
3)CSI-RS
4) PTRS
5)PRS

For example, a new reference signal having functions of the DMRS and the CSI-RS for another terminal 20 in the connected mode and having functions of time and/or frequency tracking, AGC, RRM measurement, and the like for the terminal 20 in idle mode or inactive mode may be defined. As a result, it is possible to replace the existing DMRS and CSI-RS and increase the occasion of the reference signal available to the terminal 20 in idle mode or inactive mode.

In addition, for example, a new reference signal having functions of the CSI-RS and the PRS for another terminal 20 in the connected mode and having functions of time and/or frequency tracking, AGC, RRM measurement, and the like for the terminal 20 in idle mode or inactive mode may be defined. As a result, it is possible to replace the existing CSI-RS and PRS and increase the occasion of the reference signal available to the terminal 20 in idle mode or inactive mode.

According to the above-described embodiment, the terminal 20 in idle mode or inactive mode can execute operations to be performed using the SSB, that is, time and/or frequency tracking, AGC, RRM measurement, beam selection and/or adjustment, RACH occasion and/or preamble selection, and the like by using the reference signal transmitted to another terminal 20 in the connected mode.

That is, a terminal in idle mode or inactive mode may use a signal used by another terminal in a connected mode.

### (Device Configuration)

Next, functional configuration examples of the base station 10 and the terminal 20 that execute the processes and operations described above will be described. The base station 10 and the terminal 20 include functions for executing the above-described embodiments. However, each of the base station 10 and the terminal 20 may have only one of the functions of the embodiments.

### <Base Station 10>

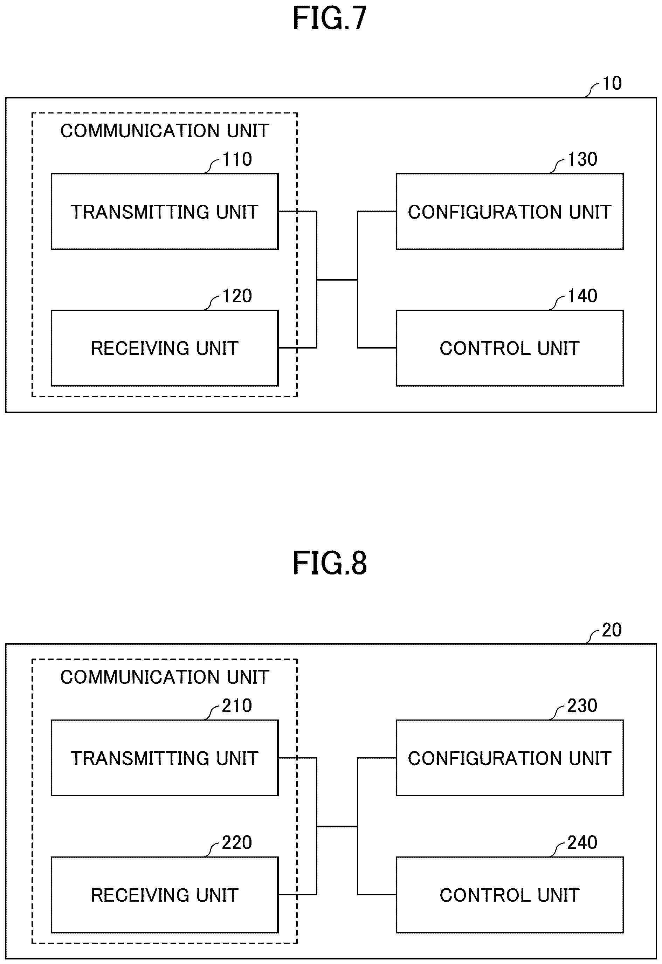

FIG. 7 is a diagram illustrating an example of a functional configuration of the base station 10. As illustrated in FIG. 7, the base station 10 includes a transmitting unit 110, a receiving unit 120, a configuration unit 130, and a control unit 140. The functional configuration illustrated in FIG. 7 is merely an example. As long as the operation according to the embodiment of the present invention can be executed, the functional division and the name of the functional unit may be anything. The transmitting unit 110 and the receiving unit 120 may be referred to as a communication unit.

The transmitting unit 110 has a function of generating a signal to be transmitted to the terminal 20 and wirelessly transmitting the signal. The receiving unit 120 includes a function of receiving various signals transmitted from the terminal 20 and acquiring, for example, information of a higher layer from the received signal. Further, the transmitting unit 110 has a function of transmitting the NR-PSS, the NR-SSS, the NR-PBCH, the DL/UL control signal, DL data, and the like to the terminal 20. The transmitting unit 110 transmits configuration information described in the embodiments.

The configuration unit 130 stores preset configuration information and various kinds of configuration information to be transmitted to the terminal 20 in a storage device, and reads the configuration information from the storage device as necessary. The control unit 140 performs, for example, resource allocation, overall control of the base station 10, and the like. It should be noted that a functional unit related to signal transmission in the control unit 140 may be included in the transmitting unit 110, and a functional unit related to signal reception in the control unit 140 may be included in the receiving unit 120. The transmitting unit 110 and the receiving unit 120 may be referred to as a transmitter and a receiver, respectively.

### <Terminal 20>

FIG. 8 is a diagram illustrating an example of a functional configuration of the terminal 20. As illustrated in FIG. 8, the terminal 20 includes a transmitting unit 210, a receiving unit 220, a configuration unit 230, and a control unit 240. The functional configuration illustrated in FIG. 8 is merely an example. As long as the operation according to the embodiment of the present invention can be executed, the functional division and the name of the functional unit may be any. The transmitting unit 210 and the receiving unit 220 may be referred to as a communication unit.

The transmitting unit 210 generates a transmission signal from the transmission data and wirelessly transmits the transmission signal. The receiving unit 220 wirelessly receives various signals and acquires signals of a higher layer from the received signal of the physical layer. Further, the transmitting unit 210 transmits HARQ-ACK, and the receiving unit 220 receives the configuration information and the like described in the embodiments.

The configuration unit 230 stores various types of configuration information received from the base station 10 by the receiving unit 220 in the storage device, and reads the configuration information from the storage device as necessary. The configuration unit 230 also stores preset configuration information. The control unit 240 performs overall control of the terminal 20. It should be noted that a functional unit related to signal transmission in the control unit 240 may be included in the transmitting unit 210, and a functional unit related to signal reception in the control unit 240 may be included in the receiving unit 220. The transmitting unit 210 and the receiving unit 220 may be referred to as a transmitter and a receiver, respectively.

### (Hardware Configuration)

The block diagrams (FIG. 7 and FIG. 8) used in the description of the above-described embodiments illustrate blocks of functional units. These functional blocks (configuration units) are realized by an arbitrary combination of at least one of hardware and software. In addition, a method of realizing each functional block is not particularly limited. That is, each functional block may be realized by using one physically or logically coupled device, or may be realized by directly or indirectly (for example, using a wire, wireless, or the like) coupling two or more physically or logically separated devices. The functional blocks may be realized by combining software with the one device or the plurality of devices.

Functions include, but are not limited to, determining, judging, calculating, computing, processing, deriving, investigating, searching, ascertaining, receiving, transmitting, outputting, accessing, resolving, selecting, choosing, establishing, comparing, assuming, expecting, deeming, broadcasting, notifying, communicating, forwarding, configuring, reconfiguring, allocating, mapping, assigning, and the like. For example, a functional block (component) that causes transmission to function is referred to as a transmitting unit or a transmitter. In either case, as described above, the implementation method is not particularly limited.

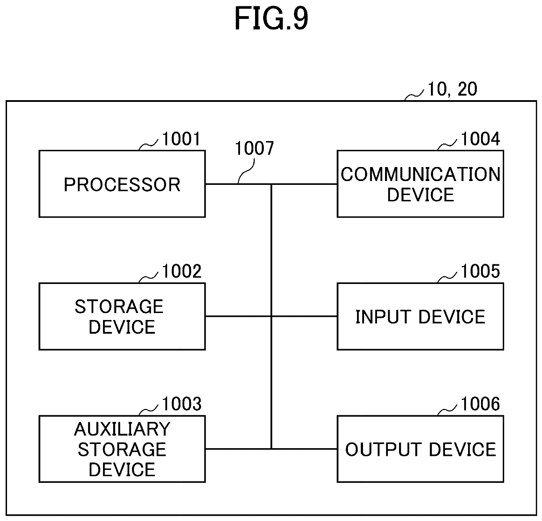

For example, the base station 10, the terminal 20, and the like according to an embodiment of the present disclosure may function as a computer that performs processing of the radio communication method according to the present disclosure. FIG. 9 is a diagram illustrating an example of a hardware configuration of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term apparatus can be read as a circuit, a device, a unit, or the like. The hardware configurations of the base station 10 and the terminal 20 may be configured to include one or a plurality of the devices illustrated in the drawings, or may be configured not to include some of the devices.

Each function in the base station 10 and the terminal 20 is realized by causing hardware such as the processor 1001, the storage device 1002, and the like to read predetermined software (program), causing the processor 1001 to execute an operation to control communication by the communication device 1004 or to control at least one of reading and writing of data in the storage device 1002 and the auxiliary storage device 1003.

The processor 1001 operates, for example, an operating system to control the entire computer. The processor 1001 may be configured by a Central Processing Unit (CPU) including an interface with a peripheral device, a control device, an operation device, a register, and the like. For example, the above-described control unit 140, control unit 240, and the like may be realized by the processor 1001.

In addition, the processor 1001 reads out a program (program code), a software module, data, or the like from at least one of the auxiliary storage device 1003 and the communication device 1004 to the storage device 1002, and executes various processes in accordance with the program, the software module, the data, or the like. As the program, a program that causes a computer to execute at least a part of the operation described in the above-described embodiment is used. For example, the control unit 140 of the base station 10 illustrated in FIG. 7 may be implemented by a control program stored in the storage device 1002 and executed by the processor 1001. In addition, for example, the control unit 240 of the terminal 20 illustrated in FIG. 8 may be implemented by a control program stored in the storage device 1002 and executed by the processor 1001. Although it has been described that the above-described various processes are executed by one processor 1001, the processes may be executed by two or more processors 1001 simultaneously or sequentially. The processor 1001 may be implemented by one or a plurality of chips. The program may be transmitted from a network via an electric communication line.

The storage device 1002 is a computer-readable recording medium, and may be constituted by at least one of a Read Only Memory (ROM), an Erasable Programmable ROM (EPROM), an Electrically Erasable Programmable ROM (EEPROM), a Random Access Memory (RAM), and the like. The storage device 1002 may be referred to as a register, a cache, a main memory (main storage device), or the like. The storage device 1002 can store programs (program codes), software modules, and the like that are executable to implement the communication method according to an embodiment of the present disclosure.

The auxiliary storage device 1003 is a computer-readable recording medium, and may include at least one of an optical disk such as a Compact Disc ROM (CD-ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The aforementioned storage medium may be, for example, a database including at least one of the storage device 1002 and the auxiliary storage device 1003, a server, or any other appropriate medium.

The communication device 1004 is hardware (transmitting/receiving device) for performing communication between computers via at least one of a wired network and a radio network, and is also referred to as a network device, a network controller, a network card, a communication module, or the like, for example. The communication device 1004 may be configured to include a high-frequency switch, a duplexer, a filter, a frequency synthesizer, and the like in order to realize, for example, at least one of Frequency Division Duplex (FDD) and Time Division Duplex (TDD). For example, a transmitting/receiving antenna, an amplifying unit, a transmitting/receiving unit, a transmission path interface, and the like may be realized by the communication device 1004. The transmitting/receiving unit may be implemented such that the transmitting unit and the receiving unit are physically or logically separated from each other.

The input device 1005 is an input device (for example, a keyboard, a mouse, a microphone, a switch, a button, a sensor, or the like) that receives input from the outside. The output device 1006 is an output device (for example, a display, a speaker, an LED lamp, or the like) that performs output to the outside. The input device 1005 and the output device 1006 may be integrated with each other (for example, a touch panel).

In addition, each device such as the processor 1001 and the storage device 1002 is connected by a bus 1007 for communicating information. The bus 1007 may be configured using a single bus, or may be configured using a different bus for each device.

The base station 10 and the terminal 20 may be configured to include hardware such as a microprocessor, a Digital Signal Processor (DSP), an Application Specific Integrated Circuit (ASIC), a Programmable Logic Device (PLD), a Field Programmable Gate Array (FPGA), or the like, and some or all of the functional blocks may be realized by the hardware. For example, the processor 1001 may be implemented using at least one of these pieces of hardware.

### (Summary of Embodiments)

As described above, according to an embodiment of the present invention, a terminal includes a receiving unit configured to receive, in an idle mode or an inactive mode, a reference signal transmitted to another terminal in a connected mode, in a serving cell or a neighboring cell, and a control unit configured to execute an operation to be performed using an SSB (SS/PBCH block) by using the reference signal.

According to the above-described configuration, the terminal 20 in idle mode or inactive mode can execute an operation to be performed using the SSB, that is, time and/or frequency tracking, AGC, RRM measurement, beam selection and/or adjustment, RACH occasion and/or preamble selection, and the like by using the reference signal transmitted to another terminal 20 in the connected mode. That is, a terminal in idle mode or inactive mode may use a signal used by another terminal in a connected mode.

The operation executed by using the SSB may be any one of the following operations 1) to 5) or a combination of two or more thereof.
1) Tracking of at least one of time and frequency
2) Auto Gain Control (AGC)
3) Measurement related to Radio Resource Management (RRM)
4) Beam selection and/or adjustment
5) Selection of Random Access Channel (RACH) occasion and/or preamble

With this configuration, the terminal 20 in idle mode or inactive mode can execute an operation performed using the SSB, that is, time and/or frequency tracking, AGC, RRM measurement, beam selection and/or adjustment, RACH occasion and/or preamble selection, and the like by using the reference signal transmitted to another terminal 20 in the connected mode.

The reference signal may be any one of the following reference signals 1) to 5) or a combination of two or more of the reference signals.
1) Demodulation Reference Signal (DMRS)
2) Tracking Reference Signal (TRS)
3) Channel State Information Reference Signal (CSI-RS)
4) Phase Tracking Reference Signal (PTRS)
5) Positioning Reference Signal (PRS)

The terminal 20 in idle mode or inactive mode can perform operations performed using the SSB, that is, time and/or frequency tracking, AGC, RRM measurement, beam selection and/or adjustment, RACH occasion and/or preamble selection, and the like by using the reference signal transmitted to another terminal 20 in the connected mode.

The receiving unit may receive a configuration related to the reference signal from a base station corresponding to the serving cell. With this configuration, the terminal 20 in idle mode or inactive mode can execute an operation performed using the SSB, that is, time and/or frequency tracking, AGC, RRM measurement, beam selection and/or adjustment, RACH occasion and/or preamble selection, and the like by using the reference signal transmitted to another terminal 20 in the connected mode.

The receiving unit may perform measurement necessary for cell reselection by using the reference signal transmitted in the neighboring cell. With this configuration, the terminal 20 in idle mode or inactive mode can execute an operation performed using the SSB, that is, time and/or frequency tracking, AGC, RRM measurement, beam selection and/or adjustment, RACH occasion and/or preamble selection, and the like by using the reference signal transmitted to another terminal 20 in the connected mode.

Furthermore, according to an embodiment of the present invention, a communication method in which a terminal performs a reception procedure of receiving a reference signal transmitted to another terminal in a connected mode in a serving cell or a neighboring cell in an idle mode or an inactive mode, and a control procedure of performing an operation using an SSB (SS/PBCH block) using the reference signal.

According to the above-described configuration, the terminal 20 in idle mode or inactive mode can execute an operation performed using the SSB, that is, time and/or frequency tracking, AGC, RRM measurement, beam selection and/or adjustment, RACH occasion and/or preamble selection, and the like by using the reference signal transmitted to another terminal 20 in the connected mode. That is, a terminal in idle mode or inactive mode may use a signal used by another terminal in a connected mode.

### (Supplementary Explanation of Embodiment)

Although the embodiments of the present invention have been described above, the disclosed invention is not limited to such embodiments, and those skilled in the art will understand various variations, modifications, alterations, substitutions, and the like. Although the present invention has been described using specific numerical examples in order to facilitate understanding of the present invention, these numerical values are merely examples and any appropriate values may be used unless otherwise specified. The division of items in the above description is not essential to the present invention. Items described in two or more items may be used in combination as necessary, and an item described in one item may be applied to an item described in another item (as long as there is no contradiction). The boundaries of functional units or processing units in the functional block diagrams do not necessarily correspond to the boundaries of physical components. The operations of a plurality of functional units may be physically performed by one component, or the operation of one functional unit may be physically performed by a plurality of components. With regard to the processing procedure described in the embodiment, the order of processing may be changed as long as there is no contradiction. For convenience of description of processing, the base station 10 and the terminal 20 have been described using functional block diagrams, but such devices may be implemented by hardware, software, or a combination thereof. Software executed by a processor included in the base station 10 according to an embodiment of the present invention and software executed by a processor included in the terminal 20 according to an embodiment of the present invention may be stored in any appropriate storage medium such as a Random Access Memory (RAM), a Flash Memory, a Read-Only Memory (ROM), an EPROM, an EEPROM, a register, a hard disk (HDD), a removable disk, a CD-ROM, a database, a server, or the like.

The indication of information is not limited to the aspects/embodiments described in the present disclosure, and may be performed using other methods. For example, the indication of the information may be performed by physical layer signaling (for example, Downlink Control Information (DCI)) and Uplink Control Information (UCI)), higher layer signaling (for example, Radio Resource Control (RRC) signaling), Medium Access Control (MAC) signaling, broadcast information (Master Information Block (MIB), System Information Block (SIB)), other signals, or a combination thereof. In addition, the RRC signaling may be referred to as an RRC message, and may be, for example, an RRC Connection Setup (RRC Connection Setup) message, an RRC Connection Reconfiguration (RRC Connection Reconfiguration) message, or the like.

Aspects/embodiments described in the present disclosure may be applied to at least one of systems using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems and nextgeneration systems extended based thereon. In addition, a plurality of systems may be combined (for example, a combination of at least one of LTE and LTE-A and 5G) and may also be applied.

The order of the processing procedures, sequences, flowcharts, and the like of each aspect/embodiment described in this specification may be changed as long as there is no contradiction. For example, the methods described in this disclosure use example orders to present elements of the various steps and are not limited to the specific order presented.

In this specification, a specific operation described as being performed by the base station 10 may be performed by an upper node of the base station 10 in some cases. In a network including one or a plurality of network nodes including the base station 10, it is apparent that various operations performed for communication with the terminal 20 may be performed by at least one of the base station 10 and other network nodes (for example, but not limited to, an MME, an S-GW, or the like) other than the base station 10. Although a case where there is one network node other than the base station 10 has been exemplified above, another network node may be a combination of a plurality of other network nodes (for example, an MME and an S-GW).

Information, a signal, or the like described in the present disclosure may be output from a higher layer (or a lower layer) to a lower layer (or a higher layer). Information, a signal, or the like may be input and output via a plurality of network nodes.

The input/output information and the like may be stored in a specific location (for example, a memory) or may be managed using a management table. The input/output information or the like may be overwritten, updated, or appended. The output information or the like may be deleted. The input information or the like may be transmitted to another device.

The determination in the present disclosure may be performed by a value (0 or 1) represented by one bit, may be performed by a Boolean value (true or false), or may be performed by comparison of numerical values (for example, comparison with a predetermined value).

Software shall be construed broadly to mean instructions, instruction sets, code, code segments, program code, programs, subprograms, software modules, applications, software applications, software packages, routines, subroutines, objects, executable files, threads of execution, procedures, functions, and so forth, whether referred to as software, firmware, middleware, microcode, hardware description language, or by other names.

Software, instructions, information, and the like may also be transmitted and received via a transmission medium. For example, if software is transmitted from a website, server, or other remote source using at least one of wired technology (coaxial cable, optical fiber cable, twisted pair, Digital Subscriber Line (DSL), and the like) and radio technology (infrared, microwave, and the like), then at least one of the wired and radio technologies fall within the definition of transmission medium.

Information, signals, and the like described in this disclosure may be represented using any of a variety of different technologies. For example, data, instructions, commands, information, signals, bits, symbols, chips, and the like that may be referenced throughout the above description may be represented by voltages, currents, electromagnetic waves, magnetic fields or magnetic particles, optical fields or optical particles, or any combination thereof.

It should be noted that the terms described in the present disclosure and the terms necessary for understanding the present disclosure may be replaced with terms having the same or similar meanings. For example, at least one of the channel and the symbol may be a signal (signaling). The signal may also be a message. Also, a Component Carrier (CC) may be referred to as a carrier frequency, a cell, a frequency carrier, or the like.

As used in this disclosure, the terms "system" and "network" are used interchangeably.

In addition, the information, the parameter, and the like described in the present disclosure may be represented by using an absolute value, may be represented by using a relative value from a predetermined value, or may be represented by using another corresponding information. For example, the radio resource may be indicated by an index.

The names used for the above-mentioned parameters are not particularly limited. Furthermore, equations and the like that use these parameters may differ from those explicitly disclosed in this disclosure. The various channels (for example, PUCCH, PDCCH, or the like) and information elements may be identified by any suitable name, and thus the various names assigned to these various channels and information elements are not particularly limited.

In the present disclosure, terms such as "Base Station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may also be referred to with terminology such as a macro cell, a small cell, a femto cell, a pico cell, or the like.

A base station can accommodate one or a plurality of (for example, three) cells. When a base station accommodates multiple cells, the entire coverage area of the base station may be divided into multiple smaller areas, and each smaller area may also provide a communication service by a base station subsystem (for example, an indoor small base station (RRH: Remote Radio Head). The term "cell" or "sector" refers to part or all of the coverage area at least one of a base station and a base station subsystem providing communication services in this coverage.

In the present disclosure, the terms "Mobile Station (MS)", "user terminal", "User Equipment (UE)", "terminal", and the like may be used interchangeably.

A terminal may also be referred to by those skilled in the art as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terminology.

At least one of the base station and the terminal may be referred to as a transmission device, a reception device, a communication device, or the like. Note that at least one of the base station and the terminal may be a device mounted on a mobile object, the mobile body itself, or the like. The mobile body may be a vehicle (for example, a car, an airplane, or the like), a moving body that moves without an operator (for example, a drone, an automatic driving vehicle, or the like), or a robot (manned or unmanned). At least one of the base station and the terminal includes a device that does not necessarily move during a communication operation. For example, at least one of the base station and the terminal may be a sensor such as an Internet of Things (IoT) device.

Also, the base station in the present disclosure may be read as a user terminal. For example, each aspect/embodiment of the present disclosure may be applied to a configuration in which communication between base stations and user terminals is replaced with communication between a plurality of terminals 20 (which may be referred to as Device-to-Device (D2D), Vehicle-to-Everything (V2X), or the like). In this case, the terminal 20 may have the functions of the base station 10 described above. In addition, terms such as "up" and "down" may be replaced with terms (for example, "side") corresponding to terminal-to-terminal communication. For example, an uplink channel, a downlink channel, and the like may be read as a side channel.

Similarly, the user terminal in the present disclosure may be read as the base station. In this case, the base station may be configured to have the functions of the above-described user terminal.

As used in this disclosure, the term "determining" may encompass a wide variety of operations. "determining" may include, for example, judging, calculating, computing, processing, deriving, investigating, looking up, search, inquiry (for example, searching in a table, a database, or another data structure), or ascertaining. Also, "determining" may include considering receiving (for example, receiving information), transmitting (for example, transmitting information), input, output, accessing (for example, accessing data in a memory). In addition, "determining" may include resolving, selecting, choosing, establishing, comparing, or the like. That is, "determining" may include a case in which some operation is regarded as "determining". In addition, "determination" may be replaced with "assuming", "expecting", "considering", and the like.

The terms "connected", "coupled", or any variation thereof, refer to any connection or coupling, either direct or indirect, between two or more elements, and may include the presence of one or a plurality of intermediate elements between two elements that are "connected" or "coupled" to each other. The coupling or connection between the elements may be physical, logical, or a combination thereof. For example, "connection" may be read as "access". As used in this disclosure, two elements may be considered to be "connected" or "coupled" to each other using one or a plurality of wires, at least one of cables and printed electrical connections, as well as using some non-limiting and non-exhaustive examples, such as electromagnetic energy having wavelengths in the radio frequency range, microwave range, and optical (both visible and invisible) range.

The reference signal may be referred to as a Reference Signal (RS) for short, and may be referred to as a Pilot according to an applied standard.

As used in this disclosure, the phrase "based on" does not mean "based only on" unless expressly specified otherwise. In other words, the statement "based on" means both "based only on" and "based at least on".

Any reference to an element using a designation such as "first", "second", and so forth as used in this disclosure does not generally limit the quantity or order of those elements. These designations may be used in this disclosure as a convenient method of distinguishing between two or more elements. Thus, a reference to first and second elements does not mean that only two elements may be employed or that the first element must precede the second element in some manner.

"Means" in the configuration of each device described above may be replaced with "unit", "circuit", "device", or the like.

When "include", "including", and variations thereof are used in this disclosure, these terms are intended to be inclusive in a manner similar to the term "comprising." Furthermore, the term "or" as used in this disclosure is not intended to be an exclusive OR.

A radio frame may be configured by one or a plurality of frames in the time domain. In the time domain, one or a plurality of each frame may be referred to as a subframe. A subframe may further be configured by one or a plurality of slots in the time domain. A subframe may be a fixed length of time (for example, 1ms) that is not dependent on numerology.

The numerology may be a communication parameter applied to at least one of transmission and reception of a certain signal or channel. The numerology may indicate, for example, at least one of a SubCarrier Spacing (SCS), a bandwidth, a symbol length, a cyclic prefix length, a Transmission Time Interval (TTI), the number of symbols per TTI, a radio frame configuration, a specific filtering process performed by the transceiver in the frequency domain, a specific windowing process performed by the transceiver in the time domain, and the like.

A slot may include one or a plurality of symbols (Orthogonal Frequency Division Multiplexing (OFDM) Symbols, Single Carrier Frequency Division Multiple Access (SC-FDMA) symbols, and the like may be used. A slot may be a time unit based on a numerology.

The slot may include a plurality of mini-slots. Each minislot may be configured by one or a plurality of symbols in the time domain. The minislot may also be referred to as a subslot. The minislot may be configured by a smaller number of symbols than the slot. A PDSCH (or PUSCH) transmitted in a time unit larger than the minislot may be referred to as a PDSCH (or PUSCH) mapping type A. The PDSCH (or PUSCH) transmitted using the minislot may be referred to as a PDSCH (or PUSCH) mapping type B.

Each of a radio frame, a subframe, a slot, a minislot, and a symbol represents a time unit for transmitting a signal. The radio frame, the subframe, the slot, the minislot, and the symbol may be respectively referred to as different names.

For example, one subframe may be referred to as a Transmission Time Interval (TTI), a plurality of consecutive subframes may be referred to as a TTI, or one slot or one minislot may be referred to as a TTI. That is, at least one of the subframe and the TTI may be a subframe (1ms) in the existing LTE, may be a period shorter than the 1ms (for example, 1 to 13 symbols), or may be a period longer than the 1ms. It should be noted that a unit representing a TTI may be referred to as a slot, a minislot, or the like instead of a subframe.

Here, the TTI refers to, for example, a minimum time unit of scheduling in radio communication. For example, in the LTE system, a base station performs scheduling for allocating radio resources (a frequency bandwidth, transmission power, and the like that can be used in each terminal 20) to each terminal 20 in units of TTIs. It should be noted that the definition of TTI is not limited to this.

The TTI may be a transmission time unit of a channel-coded data packet (transport block), a code block, a code word or the like, or may be a processing unit of scheduling, link adaptation, or the like. When the TTI is given, a time interval (for example, the number of symbols) to which a transport block, a code block, a code word, and the like are actually mapped may be shorter than the TTI.

When one slot or one minislot is referred to as a TTI, one or a plurality of TTIs (i.e., one or a plurality of slots or one or a plurality of minislots) may be a minimum time unit for scheduling. In addition, the number of slots (the number of minislots) constituting the minimum time unit of the scheduling may be controlled.

A TTI having a time length of a 1ms may be referred to as a normal TTI (a TTI in LTE Rel.8-12), a normal TTI, a long TTI, a normal subframe, a normal subframe, a long subframe, a slot, or the like. A TTI that is shorter than a normal TTI may be referred to as a shortened TTI, a short TTI, a partial or fractional TTI, a shortened subframe, a short subframe, a minislot, a subslot, a slot, or the like.

It should be noted that a long TTI (for example, a normal TTI, a subframe, or the like) may be replaced with a TTI having a time length exceeding the 1ms, and a short TTI (for example, a shortened TTI or the like) may be replaced with a TTI having a TTI length less than the TTI length of the long TTI and equal to or greater than the 1ms.

A resource block (RB) is a resource allocation unit in the time domain and the frequency domain, and may include one or a plurality of contiguous subcarriers in the frequency domain. The number of subcarriers included in the RB may be the same regardless of the numerology, for example, 12. The number of subcarriers included in the RB may be determined based on the numerology.

In addition, the time domain of the RB may include one or a plurality of symbols, and may have a length of one slot, one mini-slot, one subframe, or a 1TTI. Each of the 1TTI and one subframe may include one or a plurality of resource blocks.

It should be noted that one or a plurality of RBs may be referred to as a Physical Resource Block (PRB: Physical RB), a Sub-Carrier Group (SCG: Sub-Carrier Group), a Resource Element Group (REG: Resource Element Group), a PRB pair, an RB pair, or the like.

The resource block may be configured by one or a plurality of Resource Elements (RE). For example, a 1RE may be a radio resource domain of one subcarrier and one symbol.

A Bandwidth Part (BWP) (which may also be referred to as a partial bandwidth or the like) may refer to a subset of contiguous common resource blocks (common RBs) for a numerology in a carrier. Here, the common RB may be specified by an index of the RB with respect to a common reference point of the carrier. The PRBs may be defined in a BWP and may be numbered within the BWP.

The BWP may include a BWP for UL (UL BWP) and a BWP for DL (DL BWP). For the terminal 20, one or a plurality of BWPs may be configured in one carrier.

At least one of the configured BWPs may be active and the terminal 20 need not be assumed to transmit or receive certain signals/channels outside of the active BWP. It should be noted that "Cell", "carrier", and the like in the present disclosure may be replaced with "BWP".

The above-described structures of the radio frame, the subframe, the slot, the minislot, and the symbol are merely examples. For example, configurations such as the number of subframes included in a radio frame, the number of slots per subframe or radio frame, the number of minislots included in a slot, the number of symbols and RBs included in a slot or minislot, the number of subcarriers included in an RB, the number of symbols in a TTI, a symbol length, a Cyclic Prefix (CP) length, and the like can be changed in various ways.

In the present disclosure, for example, when articles are added by translation, such as a, an, and the in English, the present disclosure may include that nouns following these articles are plural.

In the present disclosure, the term "A and B are different" may mean "A and B are different from each other". It should be noted that the term may also mean that "A and B are each different from C". Terms such as "separate", "coupled", and the like may also be interpreted similarly to "different".

The aspects/embodiments described in the present disclosure may be used alone, may be used in combination, or may be switched and used in accordance with execution. In addition, indication of predetermined information (for example, indication of "being X") is not limited to being performed explicitly, and may be performed implicitly (for example, indication of the predetermined information is not performed).

Although the present disclosure has been described in detail above, it will be apparent to those skilled in the art that the present disclosure is not limited to the embodiments described in the present disclosure. The present disclosure can be implemented as modified and changed embodiments without departing from the spirit and scope of the present disclosure defined by the description of the claims. Accordingly, the description of the present disclosure is for illustrative purposes and is not meant to be in any way limiting to the present disclosure.

### Reference Signs List

10 Base station
110 Transmitting unit
120 Receiving unit
130 Configuration unit
140 Control unit
20 Terminal
210 Transmitting unit
220 Receiving unit
230 Configuration unit
240 Control unit
1001 Processor
1002 Storage device
1003 Auxiliary storage device
1004 Communication device
1005 Input device
1006 Output device

## Claims

1. A terminal comprising:
a receiving unit configured to receive, in an idle mode or an inactive mode, a reference signal transmitted to another terminal in a connected mode, in a serving cell or a neighboring cell; and
a control unit configured to execute an operation to be performed using an SSB (SS/PBCH block) by using the reference signal.

2. The terminal according to claim 1, wherein the operation to be performed using the SSB is any one of the following operations 1) to 5) or a combination of two or more of the following operations.
1) Tracking of at least one of time and frequency
2) Auto Gain Control (AGC)
3) Measurement related to Radio Resource Management (RRM)
4) Beam selection and/or adjustment
5) Random Access Channel (RACH) occasion and/or preamble selection

3. The terminal according to claim 2, wherein the reference signal is any one of the following reference signals 1) to 5) or a combination of two or more of the following reference signals.
1) Demodulation Reference Signal (DMRS)
2) Tracking Reference Signal (TRS)
3) Channel State Information Reference Signal (CSI-RS)
4) Phase Tracking Reference Signal (PTRS)
5) Positioning Reference Signal (PRS)

4. The terminal according to claim 3, wherein the receiving unit receives a configuration related to the reference signal from a base station corresponding to the serving cell.

5. The terminal according to claim 4, wherein the receiving unit executes a measurement necessary for cell reselection using the reference signal transmitted in the neighboring cell.

6. A communication method comprising:
receiving, in an idle mode or an inactive mode, a reference signal transmitted to another terminal in a connected mode, in a serving cell or a neighboring cell; and
executing an operation to be performed using an SSB (SS/PBCH block) by using the reference signal.
